# EUROPEAN PATENT APPLICATION

(11) **EP 3 851 976 A1**
(43) Date of publication of application: **21.07.2021**
(21) Application number: 20152159.8
(22) Date of filing: 16.01.2020
(51) Int. Cl.: G06F 16/36, G06F 11/36, G06F 8/10, G06F 8/35

(54) **ONTOLOGY-DRIVEN DATABASE**

(71) Applicant: Nicke, Peter, 71032 Böblingen (DE)
(72) Inventor: Nicke, Peter, 71032 Böblingen (DE)
(74) Representative: Meyer zu Bexten, Elmar

(57) **Abstract**

**Problem**

One disadvantage in the use of languages such as TTCN is the length of time required to learn them. Also, many nontechnical users find them unintelligible.

**Solution**

Computer-implemented method (10) comprising
defining requirements (11) for a system under test having multiple elements, transforming the requirements (11) into functional specifications (12) of the elements (26), and,
generating test cases (16) to the specifications (12),
characterized in
further defining relations among the elements (26), the test cases (16) being generated by means of the relations.

## Description

### Technical Field

The invention relates to the products and process as per the first portion of the independent claims.

### Background Art

Within the context of programming languages and software testing, by Testing and Test Control Notation (TTCN) is meant a standardized language used to write detailed test specifications. The core language in its latest version, TTCN-3, is standardized by ETSI ES 201 873-1 and recommended by ITU-T Z.161. At ETSI, TTCN-3 has been used to test conformance with the Session Initiation Protocol (SIP) for Voice over IP (VoIP), IPv6, Digital Mobile Radio (DMR), HiperMAN, WiMax, and the 3GPPTM IP Multimedia Subsystem (IMS). Although primarily used in telecommunications, TTCN constitutes the state of the art across multiple industries, its use having spread to automotive, railway, and financial applications.

CN 102929680 A (ISOFT INFRASTRUCTURE SOFTWARE CO., LTD) 13.02.2013 discloses a method, a device and a system for converting a TTCN-3 script into a Java source code to compile the TTCN-3 script. According to the method, a translator of the TTCN-3 script is constructed, analyzes and verifies a test object file, and then translates the TTCN-3 script into a Java file according to predefined translation rules. A Java runtime support library is constructed according to the translation rules of the translator, supports the foundation classes quoted in a translation scheme, and completes the execution of the code generated by translation and the recording of the execution results. The complete Java source code in accordance with a TTCN-3 semanteme can be acquired through the integration of the code translated by the translator and the code of the runtime support library.

Keyword-driven testing is a test case specification approach that is commonly used to support test automation and whose fundamental idea is to provide a set of building blocks - referred to as keywords - that may be used to create manual or automated test cases without detailed knowledge of programming or test tool expertise. Keyword-driven testing aims to provide a basic, unambiguous set of keywords comprehensive enough so that most, if not all, required test cases can be entirely composed of said keywords. The vocabulary included in these dictionaries or libraries of keywords is, therefore, a reflection of the language and level of abstraction used to write the test cases and not of any standard computer programming language. Practical applications may be gathered from HAMETNER, Reinhard, et al. Agile testing concepts based on keyword-driven testing for industrial automation systems. IECON 2012 - 38th Annual Conference on IEEE Industrial Electronics Society. 25.10.2012, p.3727-3732.

### Summary of invention

The invention as claimed is hereinafter disclosed in such a way that the technical problem with which it deals can be appreciated and the solution can be understood.

### Technical Problem

When developing a highly intricate system, one of the key challenges is to establish a shared, unambiguous terminology that accurately captures the issues, product requirements, and the product itself. This challenge can be particularly critical in large-scale, distributed development teams. Simple glossaries are often introduced to address this problem.

### Solution to Problem

The problem is solved as per the second portion of Claim 1.

### Advantageous effect of invention

The invention expands upon the idea of a glossary by including ontological approaches, thereby rendering the concept readily available to any stakeholder.

To this end, relations between glossary entries are defined in addition to further meta information. This is accomplished using a dedicated database, which may be provided centrally within a project and linked to existing IT systems. In contrast to known approaches for ontological databases, highly precise mathematical relations between the database entries are created and made available to the project team or even the product to be developed. This allows, for instance, the creation of machine-readable databases that represent laws, regulations, etc., allowing systems to work with those databases. For example, a road traffic regulations database could be shared between original equipment manufacturers (OEMs) and an autonomously driving car. Moreover, ontologies may be used to provide information about relevant test parameters (defined by the ontological relationships) to test benches or quality assurance.

### Brief description of drawings

Figure 1 depicts a method as claimed.
Figure 2 depicts a corresponding testing framework.

### Description of embodiments

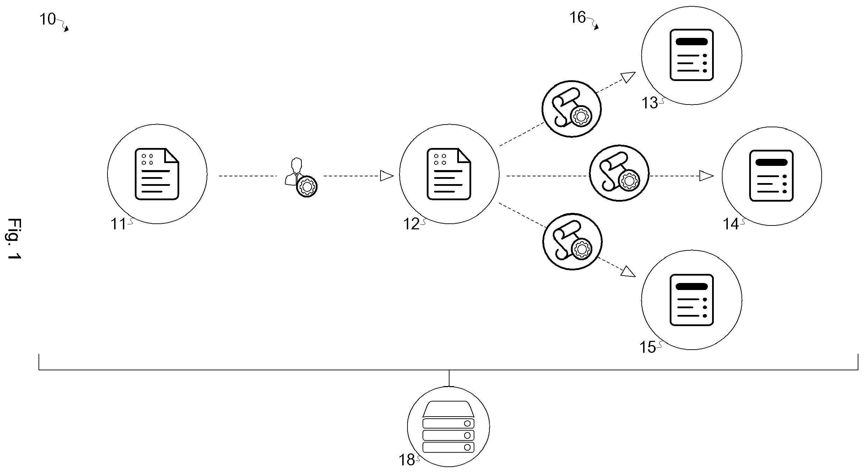

The method (10) illustrated by Figure 1 extends upon the concept of keyword-driven testing by introducing a central concept referred to as an "ontology scene". The ontology scene stores a digital model of some part of the real world. Reflecting the fact that model building is a complex process, that section of the real world should be self-contained with respect to influences across its boundaries. Building the model is based on abstraction and reduction to significant parts.

The ontology scene contains objects and interactions between these objects, hereinafter referred to as system elements. A system element has a qualitative description given by a class and an entity as well as a quantitative description given by a set of attributes.

The ontology scene is contained in an underlying database (18) that may cover multiple domains (13, 14, 15). Such domains (13, 14, 15) might include, for example, hardware or software "in the loop" (13), vehicle driver instructions (14), messaging (15) over a signal network such as Flexray or Ethernet, or system state.

In addition to the actual entity, a system element may be further qualified by its class, for example, "ENV", "EGO", "INV", or "ROAD". For instance, entities of the class "ENV" could be labelled "ENV::Location", "ENV::State", and "ENV::Weather". Moreover, an element may be attributed with a value set such as, in the case of "INV::TrafficLight", the set comprising the elements "Green", "Yellow", and "Red".

Different attributes of different system elements may have some interaction. In that case, to obtain the current value of a single attribute of a given system element, influences from other attributes of other system elements may need to be considered. Hence, the dynamics of interaction between attributes are important to determine or define the value of an attribute, requiring all influences on that attribute to be found and evaluated.

To this end, an initial value of the attribute to be determined is assumed by default. This initial value can be overwritten or modified by the influence function. (Where a plurality of influence functions is defined, only the first one can overwrite the initial value.) Starting from that initial value, to generate a test case associated with the respective system element, multiple values may be sampled and combined with the attributes of other system elements associated with that test case.

The repository (18) created throughout the specification phase can be easily distributed across project teams, departments, and external cooperation partners along with the actual specification (12). It essentially defines a meta-model, allowing for the concrete syntax and semantics to be adapted to project-specific requirements.

During the development process, this approach enables the translation of requirements (11) into abstract test specifications (12) and, ultimately, test cases (16) for the different domains (13, 14, 15). Transfer from a requirement (11) to the corresponding test specification (12) is supported by the reusability of pertinent system elements, allowing establishment of a one-to-one relationship between both artefacts (11, 12). Even fully automated translation of functional requirements (11) is possible given no more than a few requirement design rules.

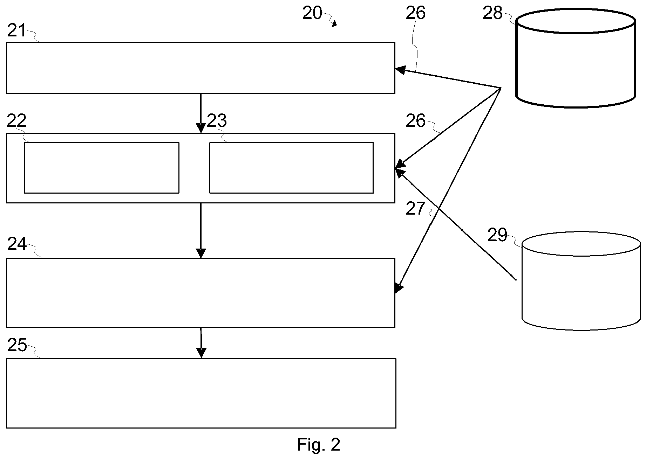

Especially in complex projects, acceptance of a uniform specification language depends on the right tooling (see Figure 2). It is thus fundamental that the work processes followed by a developer are changed as little as possible and the application of a prescribed language does not generate any additional work. With respect to these requirements, a tooling as per the invention fits seamlessly into an existing work and test environment (25) and can be used independently of any application.

### Industrial applicability

The invention is applicable, inter alia, throughout the electronics, software, and automotive industries.

### Reference signs list

- 10: Method
- 11: Requirements
- 12: Functional specifications
- 13: Hardware in the loop (HiL), software in the loop (SiL)
- 14: Vehicle driver instructions
- 15: Input and output signals, messaging
- 16: Test cases
- 18: Repository
- 20: Apparatus, test framework, computer
- 21: Editor
- 22: Decomposer
- 23: Data sequencer
- 24: Means for translating keywords into scripts
- 25: Test environment
- 26: System elements
- 27: Scripts
- 28: Repository
- 29: Data

### Citation list

The following documents are cited hereinbefore.

### Patent literature

CN 102929680 A (ISOFT INFRASTRUCTURE SOFTWARE CO., LTD) 13.02.2013

### Non-patent literature

HAMETNER, Reinhard, et al. Agile testing concepts based on keyword-driven testing for industrial automation systems. IECON 2012 - 38th Annual Conference on IEEE Industrial Electronics Society. 25.10.2012, p.3727-3732.

## Claims

1. Computer-implemented method (10) comprising
defining requirements (11) for a system under test having multiple elements, transforming the requirements (11) into functional specifications (12) of the elements (26), and,
generating test cases (16) to the specifications (12),
**characterized in**
further defining relations among the elements (26), the test cases (16) being generated by means of the relations.

2. Method (10) as per Claim 1
**characterized in that**
the relations take the form of influences, definitions, limitations, and affiliations of the elements (26).

3. Method (10) as per Claim 1 or Claim 2
**characterized in that**
the elements (26) are qualified by prefixing class and, preferably hierarchically, system identifiers.

4. Method (10) as per any of the preceding claims
**characterized in that**
the elements (26) and relations are documented in a repository (18, 28) preferably distributed along with the specifications (12).

5. Method (10) as per Claim 4
**characterized in that**
the repository (18, 28) is an ontology-driven database (18, 28) such as a collaborative library or object-oriented requirements system.

6. Method (10) as per Claim 5
**characterized in that**
each element (26) is attributed with a value set, such as by means of an enumeration.

7. Method (10) as per Claim 6
**characterized in that**
each test case (16) is generated by combining various values comprised by the value set of each element (26) associated with that test case (16).

8. Method (10) as per Claim 7
**characterized in that**,
where the respective value set takes the form of an interval, the values to be combined are sampled, for example, randomly or equidistantly, across the interval.

9. Method as per any of Claim 5 through Claim 8
**characterized in that**
the database (18, 28) comprises country-specific regulations, such as on road traffic, and
the regulations are passed to the system for in-field use such as autonomous driving.

10. Data processing apparatus (20) comprising a processor configured to perform the method (10) of any of Claim 5 through Claim 9.

11. Apparatus (20) as per Claim 10
**characterized in**
an editor (21) connected to the database (18, 28).

12. Apparatus (20) as per Claim 11
**characterized in**
a decomposer (22) and data sequencer (23) connected to the database (18, 28) and to the editor (21).

13. Apparatus (20) as per any of Claim 10, Claim 11, or Claim 12
**characterized in**
further software tools connected to the database (18, 28), such as for requirements management, failure mode and effects analysis, word processing, or other databases and modeling tools.

14. Computer program comprising instructions which, when the program is executed by a computer (20), cause the computer (20) to carry out the method (10) of Claim 1.

15. Data (29) carrier signal carrying the program of Claim 14.
